Europäisches Patentamt

European Patent Office

Office européen des brevets

(11) Veröffentlichungsnummer : **0 179 077**
**B1**

(12) **EUROPÄISCHE PATENTSCHRIFT**

(45) Veröffentlichungstag der Patentschrift :
04.05.88

(51) Int. Cl.⁴ : **F 16 L 23/00**

(21) Anmeldenummer : **85901336.9**

(22) Anmeldetag : **01.04.85**

(86) Internationale Anmeldenummer :
**PCT/CH 85/00052**

(87) Internationale Veröffentlichungsnummer :
**WO/8504939 (07.11.85 Gazette 85/24)**

(54) **ROHRVERBINDUNG.**

(30) Priorität : **16.04.84 CH 1889/84**

(43) Veröffentlichungstag der Anmeldung :
**30.04.86 Patentblatt 86/18**

(45) Bekanntmachung des Hinweises auf die Patenterteilung : **04.05.88 Patentblatt 88/18**

(84) Benannte Vertragsstaaten :
**AT BE CH DE FR GB IT LI LU NL SE**

(56) Entgegenhaltungen :
**DE-A- 2 119 547**
**US-A- 3 652 110**
**US-A- 4 480 861**

(73) Patentinhaber : **WHELI INTER AG**
**Gartenstrasse 2**
**CH-6300 Zug (CH)**

(72) Erfinder : **HEFEL, Jürg, Walter**
**Almendsberg**
**CH-9428 Walzenhausen (CH)**

(74) Vertreter : **Schmauder, Klaus Dieter et al**
**c/o Schmauder & Wann Patentanwaltsbüro Nidelbad-**
**strasse 75**
**CH-8038 Zürich (CH)**

## Beschreibung

Die Erfindung betrifft eine Rohrverbindung gemäss Oberbegriff des Anspruches 1.

Eine Rohrverbindung der eingangs genannten Art ist beispielsweise aus der CH-A-623 392 bekannt. Bei dieser Rohrverbindung ist es nachteilig, dass an dem Verbindungsstück zwischen Anschlusshülse und Anschlussflansch keine Dichtfläche vorhanden ist.

Aufgabe der Erfindung ist es, eine Rohrverbindung der eingangs genannten Art zu verbessern.

Die gestellte Aufgabe wird erfindungsgemäss durch die kennzeichnenden Merkmale des Anspruches 1 gelöst. Dadurch, dass zwischen der Anschlusshülse und dem Anschlussflansch eine radial verlaufende Dichtfläche vorhanden ist, ergibt sich eine besonders optimale Abdichtung, da das Flachdichtungsprinzip der Anschlusshülse mit dem radialen Dichtungsprinzip am Anschlussflansch kombiniert ist, wodurch sich die Dichtungseffekte optimal ergänzen. Vorteilhaft an der Rohrverbindung gemäß der Erfindung ist, dass die geneigt verlaufende radiale Dichtfläche mit einer Dichtfläche des anschliessenden Anschlussflansches einen radialen Spalt bildet, der sich nach aussen hin verjüngt. Beim Verspannen der Rohrverbindungsstücke gegeneinander wird dadurch eine radiale Kraftkomponente auf das Dichtungsmaterial ausgeübt, die den Dichtungsring gegen die Anschlusstelle des Rohrendes presst und damit die Dichtung gerade im Bereich des Rohrendes verstärkt.

Durch diese Anordnung wird sichergestellt, dass an der radial verlaufenden Dichtfläche zwischen dem Anschlussflansch und der Anschlusshülse tatsächlich ein Dichtungsmaterial vorhanden ist.

Vorteilhafte Ausbildungen der Erfindung sind in den Ansprüchen 2 bis 5 beschrieben.

Der Anspruch 2 beschreibt einen besonders einfachen und wirkungsvollen Abschluss des Dichtungsringes innerhalb der sich verjüngenden Kammer, die aus der Anschlusshülse und dem Rohrstück gebildet ist. Dadurch wird ein Austreten von Dichtungsmaterial an der Anschlussstelle der Anschlusshülse verhindert.

Gemäss Anspruch 3 kann das Rohrverbindungsstück mit seiner Anschlusshülse am Anschlussende mit dem Rohrstück verschweisst werden. Da an dieser Stelle keine dichte Naht vorhanden sein muss, genügen einige Schweisstellen, die am Umfang des Rohres bzw. der Anschlusshülse verteilt angeordnet werden können. Für leichtere Rohrverbindungen kann es aber auch genügen, die Anschlusshülse gemäss Anspruch 4 am Rohrstück zu fixieren, wobei die Schrauben entweder direkt auf das Rohrstück wirken können oder indirekt über einen Ring nach Anspruch 2.

Der Dichtungsring kann einteilig sein und an beiden Enden konische Flächen aufweisen oder aber in der Mitte geteilt.

Dann ist es zweckmässig, wenn der Dichtungsring nach Anspruch 5 ausgestaltet ist, um den Dichtungsweg zu erhöhen.

Der Dichtungsring kann aus plastischen Werkstoff ausgebildet sein und ist zweckmässigerweise mit einer Verstärkungseinlage versehen. Letztere kann beispielsweise aus Metall, Kunststoff, Glas, Keramikmaterial oder textilem Material bestehen.

Ausführungsbeispiele der Erfindung werden nachfolgend anhand der Zeichnungen näher beschrieben, dabei zeigen:

Figur 1 eine Rohrverbindung an zwei Rohrenden im Längsschnitt;

Figur 2 einen Dichtungsring im Längsschnitt und im Ausschnitt;

Figur 3 eine Rohrverbindung mit abgewandelten Rohrverbindungsstücken im Längsschnitt und im Ausschnitt; und

Figur 4 eine Rohrverbindung aus einem DIN-Flansch mit einem Rohrverbindungsstück im Längsschnitt und im Ausschnitt.

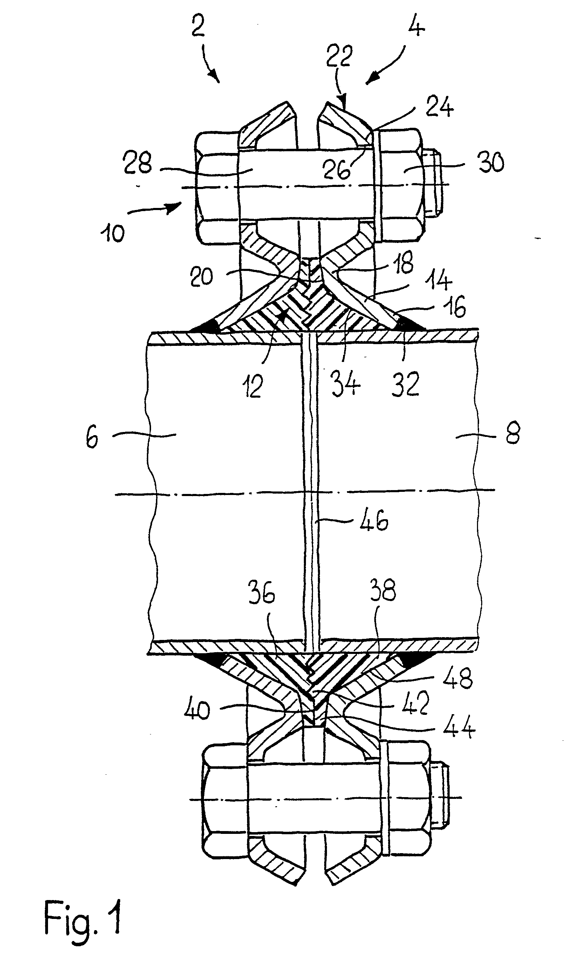

Die in Figur 1 gezeigte Rohrverbindung enthält zwei Rohrverbindungsstücke 2, 4, die jeweils am Ende eines Rohrstückes 6, 8 angeordnet sind und über Verbindungsglieder 10 miteinander verspannt sind, wobei ein Dichtungsring 12 die Rohrverbindung abdichtet.

Die Rohrverbindungsstücke 2, 4 bestehen jeweils aus einer Anschlusshülse 14, die an einem Ende 16 praktisch auf dem Rohrstück 6, 8 aufsitzt und sich gegen das andere Ende konisch erweitert. An diesem Ende ist die Anschlusshülse 14 über einen radialen Verbindungsteil 18 mit einer radial verlaufenden Dichtfläche 20 mit einem Anschlussflansch 22 verbunden. Letzterer enthält einen in Richtung der Anschlusshülse ausgewölbten Anschlussring 24, der an seinem Umfang verteilte Oeffnungen 26 zur Aufnahme der Verbindungsglieder 10 enthält. Diese werden beispielsweise im vorliegenden Fall aus einem Schraubenbolzen 28 mit aufgeschraubter Mutter 30 gebildet. Die Rohrverbindungsstücke sind vorzugsweise jeweils aus einem Blech tiefgezogen. Am Ende 16 sind die Rohrverbindungsstücke 2, 4 mit den Rohrstücken 6, 8 über eine Schweissnaht 32 verbunden.

Die konische Anschlusshülse 14 bildet mit dem Umfang des Rohrstückes 6 bzw. 8 eine Kammer 34 zur Aufnahme des Dichtungsringes 12. Der Dichtungsring 12 ist im vorliegenden Beispiel aus zwei Teilen 36, 38 gebildet, die längs radialer Dichtungsflächen 40 aneinanderliegen. Zur Verbesserung der Dichtungseigenschaft sind die radialen Dichtungsflächen 40 mit konzentrischen Rippen 42 versehen, die ineinander greifen. Im Bereich der radialen Dichtungsfläche enthält jeder Teil des Dichtungsringes einen radialen Flanschteil 44, der in dem durch die Verbindungsteile 18 gebildeten Radialspalt eingreift und an den Dichtflächen 20 anliegt. Diese sind zweckmässigerweise in radialer Richtung nach aussen von der Anschlusshülse 14 weggeneigt, so dass sich der Spalt in radialer Richtung verjüngt. Die radiale Dichtungsfläche sitzt über der Stossfuge 46 der Rohrstücke 6, 8. Jeder Teil 36, 38 des Dichtungsringes weist einen konischen Aussenmantel auf, der in die Kammer 34 eingreift.

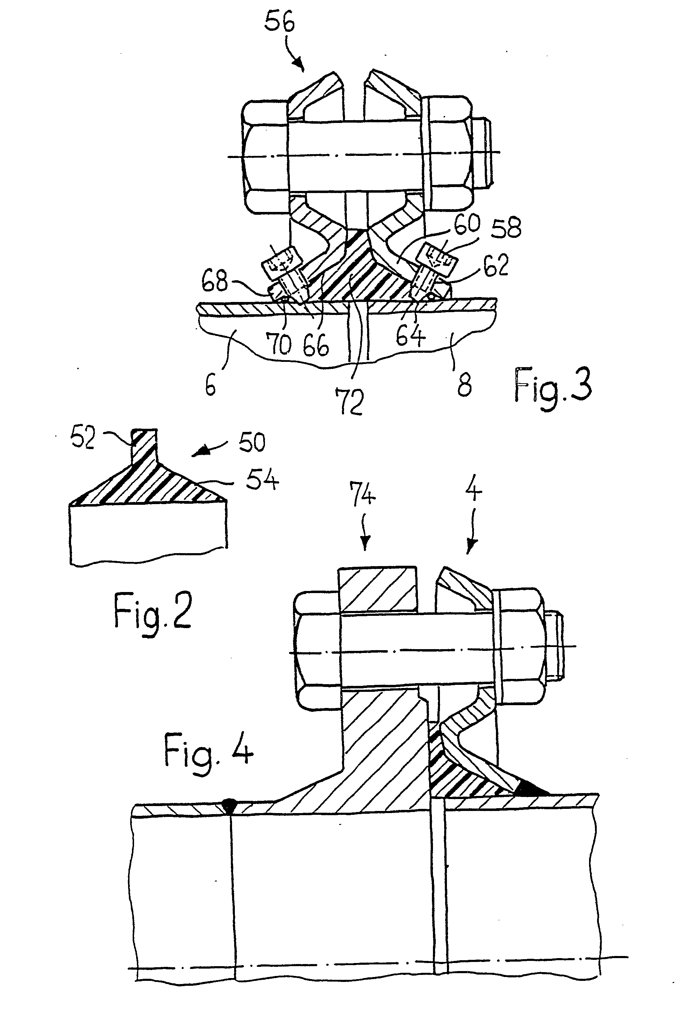

Die Figur 2 zeigt einen einteiligen Dichtungsring 50, der einen mittleren radialen Flanschteil 52 und konische Aussenteile 54 aufweist. Er entspricht im übrigen dem Dichtungsring 12 der Figur 1.

Die Figur 3 zeigt eine weitere Rohrverbindung, die im wesentlichen jener der Figur 1 entspricht. Im Beispiel der Figur 3 erfolgt die Fixierung der Rohrverbindungsstücke 56 an den Rohrstücken 6, 8 mittels Schrauben 58, die am Umfang der Anschlusshülse 60 verteilt in Gewindeöffnungen 62 derselben eingeschraubt sind. Die Schrauben 58 enthalten Schneidkanten 64, die sich in das Material der Rohrstücke 6, 8 eingraben. Dadurch, dass die Schrauben 58 senkrecht auf der Mantelfläche der Anschlusshülse 60 stehen, erhalten sie eine Neigung, welche das Verspannen der Anschlusshülse 60 beim Verbinden der Rohrverbindungsstücke 56 begünstigt. Zur Abdichtung der Kammer 66 zwischen der Anschlusshülse 60 und den Rohrstücken 6, 8 ist in die Kammer an den am Rohrstück 6, 8 anstehenden Ende 68 der Anschlusshülse 60 ein Ring 70, beispielsweise ein Drahtring oder ein Spannring, eingelegt, um das Austreten des Dichtungsmaterials des Dichtungsringes 72 zu verhindern. Der Ring 70 kann mittels der Schrauben 58 auf das zugehörige Rohrstück 6, 8 gepresst werden.

Die Figur 4 zeigt eine Rohrverbindung, bei der ein Rohrverbindungsstück 4 der Figur 1 an einem Flansch 74 angeschlossen ist. Solche Flansche 74 können NORM-Flansche und/oder Spezial-Flansche sein, die normalerweise verwendet werden, um Rohrverbindungen an Apparaturen, Armaturen und Behälter, Leitungen und dgl. herzustellen.

### Patentansprüche

1. Rohrverbindung mit mindestens einem durch spanlose Formgebung aus Blech gebildeten Rohrverbindungsstück (2, 4, 56), welches eine konische Anschlusshülse (14, 60) zum Ansetzen am Ende eines Rohrstückes (6, 8) und zur Aufnahme eines verformbaren konischen Dichtungsringes (12, 50, 72) in einer zwischen Rohrstück (6, 8) und Anschlusshülse (14, 60) gebildeten Kammer (34, 66), sowie einen am erweiterten Ende der Anschlusshülse (14, 60) angeformten Anschlussflansch (22) aufweist, der einen in Richtung der Anschlusshülse ausgewölbten Anschlussring (24) zum Ansetzen von Verbindungsgliedern (10) enthält, dadurch gekennzeichnet, dass der Anschlussflansch (22) zwischen der Anschlusshülse (14, 60) und dem Anschlussring (24) eine radial verlaufende Dichtfläche (20) aufweist, die in radialer Richtung nach aussen von der Anschlusshülse (14, 60) weg geneigt ist, wobei der Dichtungsring (12, 50, 72) einen an der radial verlaufenden Dichtfläche (20) des Rohrverbindungsstückes (2, 4, 56) anliegenden Flanschteil (44, 52) aufweist.

2. Rohrverbindung nach Anspruch 1, dadurch gekennzeichnet, dass in der von der Anschlusshülse (14, 60) und dem Rohrstück (6, 8) gebildeten Kammer (34, 66) am verjüngten Ende (16, 68) ein Ring (70), beispielsweise ein Spann- bzw. Drahtring angeordnet ist.

3. Rohrverbindung nach Anspruch 1, dadurch gekennzeichnet, dass die Anschlusshülse (14) am Anschlussende (16) mit dem Rohrstück (6, 8) verschweissbar ist.

4. Rohrverbindung nach Anspruch 1, dadurch gekennzeichnet, dass in der Anschlusshülse (60) über den Umfang verteilt, gegen das Rohrstück (6, 8) gerichtete Schrauben (58) vorzugsweise mit Schneidkanten (64) angeordnet sind, die vorzugsweise senkrecht zur Mantelfläche der Anschlusshülse ausgerichtet sind.

5. Rohrverbindung nach Anspruch 1, dadurch gekennzeichnet, dass der Dichtungsring (12) eine radiale Dichtungsfläche (40) aufweist, die in axialer Richtung über die Anschlussebene des Anschlussflansches (22) vorsteht und mit konzentrischen Rippen (42) versehen ist.

### Claims

1. A pipe connection device comprising at least one pipe jointing piece (2, 4, 56) which is formed sheet-metal by non-cutting shaping and which has a conical connecting sleeve (14, 60) for mounting on the end of a length of pipe (6, 8) and for reception of a deformable conical sealing ring (12, 50, 72) in a chamber (34, 66) formed between the length of pipe (6, 8) and the connecting sleeve (14, 60), as well as a connecting flange (22) which is integrally formed at the widened end of the connecting sleeve (14, 60) and which contains a connecting ring (24), outwardly arched in the plane of the connecting sleeve, for the fixing of jointing members (10), characterised in that the connecting flange (22) has, between the connecting sleeve (14, 60) and the connecting ring (24), a radially extending sealing surface (20) which is inclined in the radial direction outwards away from the connecting sleeve (14, 60) the sealing ring (12, 50, 72) having a flange part (44, 52) which butts against the radially extending sealing surface (20) of the pipe jointing piece (2, 4, 56).

2. Pipe connection device according to claim 1, characterised in that arranged in the chamber (34, 66) formed by the connecting sleeve (14, 60) and the length of pipe (6, 8), at the narrowed end (16, 68), is a ring (70), for example a clamping ring or, respectively a wire ring.

3. Pipe connection device according to claim 1, characterised in that the connection sleeve (14) is weldable at its connection end (16) to the length of pipe (6, 8).

4. Pipe connection device according to claim 1, characterised in that arranged in the connecting sleeve (60), and distributed around its circumference, are screws (58) which are directed towards the length of pipe (6, 8) and preferably have cutting edges (64) and which are preferably aligned perpendicular to the surface of the connecting sleeve.

5. Pipe connection device according to claim 1, characterised in that the sealing ring (12) has a radial sealing surface (40) which protrudes in the axial direction beyond the connection plane of the connecting flange (22) and is provided with concentric ribs (42).

## Revendications

1. Dispositif de raccordement pour tuyaux comprenant au minimum un élément de raccord réalisé en tôle par formage (2, 4, 56) muni d'un manchon de raccordement conique (14, 60) destiné à être appliqué à l'extrémité d'une section de tuyau (6, 8) et prévu pour recevoir un joint d'étanchéité conique déformable (12, 50, 72) dans une chambre (34, 66) ménagée entre la section de tuyau (6, 8) et un manchon de raccordement (14, 60) ainsi qu'une bride de raccordement (22) façonnée sur une extrémité élargie du manchon de raccordement (14, 60), qui comprend un anneau de raccordement (24) incurvé en direction du manchon de raccordement pour le montage des organes d'assemblage (10), caractérisé en ce que la bride de raccordement (22) entre les manchons de raccordement (14, 60) et l'anneau de raccordement (24) comprend une portée d'étanchéité disposée radialement (20) inclinée vers l'extérieur du manchon de raccordement (14, 60) dans le sens radial, de telle sorte que le joint d'étanchéité (12, 50, 72) comprend une partie en forme de bride (44, 52) venant en contact avec la portée d'étanchéité (20) disposée radialement des éléments de raccord (2, 4, 56).

2. Dispositif de raccordement de tuyaux selon la revendication 1, caractérisé en ce qu'il est monté dans la chambre (34, 66) formée par le manchon de raccordement (14, 60) et la section de tuyau (6, 8), à l'extrémité amincie (16, 68) un anneau (70), de préférence un jonc de retenue ou un circlip.

3. Dispositif de raccordement de tuyaux selon la revendication 1, caractérisé en ce que le manchon de raccordement (14) peut être soudé sur la section de tuyau (6, 8) à l'extrémité de raccordement (16).

4. Dispositif de raccordement de tuyaux selon la revendication 1, caractérisé en ce qu'il est prévu dans le manchon de raccordement (60) des vis 58 réparties sur la périphérie, tournées contre la section de tuyau (6, 8), de préférence à arêtes tranchantes (64), disposées de préférence perpendiculairement à la surface de l'enveloppe du manchon de raccordement.

5. Dispositif de raccordement pour tuyaux selon la revendication 1, caractérisé en ce que le joint d'étanchéité (12) comprend une portée d'étanchéité radiale (40) qui fait saillie en direction axiale sur le plan de raccordement de la bride de raccordement (22) et qui est pourvue de nervures concentriques (42).

Fig. 1

56

60 58

62

68

70 66

6

72

8

Fig.3

52 50

54

74 4

Fig.2

Fig. 4